# EUROPEAN PATENT APPLICATION

(11) **EP 4 074 798 A1**
(43) Date of publication of application: **19.10.2022**
(21) Application number: 20898616.6
(22) Date of filing: 27.11.2020
(51) Int. Cl.: C09J 11/06, C09J 11/08, C09J 107/02, C09J 109/04, C09J 109/08, C09J 109/10, C09J 111/02, C09J 119/02, C09J 121/02, C09J 201/00, D06M 13/11, D06M 13/395, D06M 15/41, D06M 15/693, B60C 9/00

(54) **ADHESIVE COMPOSITION**

(30) Priority: 09.12.2019 JP 2019222451
(71) Applicant: BRIDGESTONE CORPORATION, Chuo-ku Tokyo 104-8340 (JP)
(72) Inventor: TAKAHASHI, Yuka, Tokyo 104-8340 (JP); NAKAMURA, Masaaki, Tokyo 104-8340 (JP)
(74) Representative: Marks & Clerk LLP
(86) International application number: PCT/JP2020/044384
(87) International publication number: WO 2021/117519

(57) **Abstract**

Provided are an adhesive composition for organic fiber cords that is environmentally friendly as a result of not containing resorcin and formalin and has good adhesiveness, a method of producing the adhesive composition for organic fiber cords, and a rubber reinforcement member (organic fiber cord-rubber composite) and a tire using the same. An adhesive composition for organic fiber cords comprises: a first bath treatment liquid; and a second bath treatment liquid, wherein the first bath treatment liquid is a composition containing an epoxy compound and an isocyanate compound, and the second bath treatment liquid is a composition containing a polyphenol compound except resorcin and an aromatic ring-containing aldehyde compound.

## Description

### TECHNICAL FIELD

The present disclosure relates to an adhesive composition for organic fiber cords that is environmentally friendly as a result of not containing resorcin and formalin and has good adhesiveness, a method of producing the adhesive composition for organic fiber cords, and a rubber reinforcement member (organic fiber cord-rubber composite) and a tire using the same.

### BACKGROUND

In rubber articles such as tires, belts, air springs, and rubber hoses, organic fibers made of polyester fibers or the like are used in the form of filaments, cords, cables, cord fabric, canvas, etc. as a reinforcing material for supplementing the strengths of the articles.

When using organic fibers in the form of an organic fiber cord as such a reinforcing material, first, the organic fiber cord is adhered to a rubber for coating the organic fiber cord using an adhesive composition for organic fiber cords to thus form an organic fiber cord-rubber composite. This organic fiber cord-rubber composite is used as a reinforcement member of a rubber article such as a tire.

As adhesive compositions for organic fiber cords, RFL (resorcin, formalin, latex) adhesives for organic fiber cords containing resorcin, formalin, and rubber latex are conventionally used to ensure adhesiveness by heat curing (see PTL 1 to PTL 3).

It is also known to use resorcin formalin resin obtained by initial condensation of resorcin and formalin (see PTL 4 and PTL 5) or to pretreat an organic fiber cord made of polyester fiber using epoxy resin, in order to further improve adhesiveness.

Formalin is an important raw material for crosslinking resorcin. However, there is a need to reduce usage of formalin in view of working environments in recent years. Likewise, reduction in usage of resorcin is needed from an environmental viewpoint.

In view of this, there are proposed adhesive compositions for organic fiber cords that do not contain resorcin and formalin and are more preferable for the environment/working environments and for adhesiveness, production methods for the adhesive compositions, and organic fiber cord-rubber composites and tires using the same (see PTL 6 and PTL 7). However, these techniques are not in practical use because, due to slow curing of the adhesive, the adhesive tends to dry and attach to a curing device and the productivity is low. Moreover, the adhesiveness of the adhesive is weak.

### CITATION LIST

### Patent Literature

PTL 1: JP S58-2370 A
PTL 2: JP S60-92371 A
PTL 3: JP S60-96674 A
PTL 4: JP S63-249784 A
PTL 5: JP S 63-61433 B2
PTL 6: JP 2010-255153 A
PTL 7: JP 5990825 B2

### SUMMARY

### (Technical Problem)

It could therefore be helpful to provide an adhesive composition for organic fiber cords that is environmentally friendly as a result of not containing resorcin and formalin and has good adhesiveness, a method of producing the adhesive composition for organic fiber cords, and a rubber reinforcement member (organic fiber cord-rubber composite) and a tire using the same.

### (Solution to Problem)

We conducted various studies on adhesive compositions for organic fiber cords, and consequently discovered that the following adhesive composition for organic fiber cords is environmentally friendly as a result of not containing resorcin and formalin and has good adhesiveness: an adhesive composition for organic fiber cords comprising: a first bath treatment liquid; and a second bath treatment liquid, wherein the first bath treatment liquid is a composition containing an epoxy compound and an isocyanate compound, and the second bath treatment liquid is a composition containing a polyphenol compound except resorcin and an aromatic ring-containing aldehyde compound. The present disclosure is based on such discovery.

An adhesive composition for organic fiber cords according to the present disclosure is
[1] an adhesive composition for organic fiber cords comprising: a first bath treatment liquid; and a second bath treatment liquid, wherein the first bath treatment liquid is a composition containing an epoxy compound and an isocyanate compound, and the second bath treatment liquid is a composition containing a polyphenol compound except resorcin and an aromatic ring-containing aldehyde compound.

This adhesive composition for organic fiber cords is environmentally friendly as a result of not containing resorcin and formalin and has good adhesiveness.

Preferably, the adhesive composition for organic fiber cords according to the present disclosure is
the adhesive composition for organic fiber cords according to [1], wherein the second bath treatment liquid further contains latex.

This adhesive composition for organic fiber cords provides a good bond between the adhesive layer by the adhesive composition for organic fiber cords and the adherend rubber. The latex has the advantage of being relatively soft and flexible, and allows deformation of the organic fiber cord without the adhesive layer breaking up.

Preferably, the adhesive composition for organic fiber cords according to the present disclosure is
the adhesive composition for organic fiber cords according to [1] or [2], wherein the aromatic ring-containing aldehyde compound has two or more aldehyde groups in one molecule.

This adhesive composition for organic fiber cords has better adhesiveness.

Preferably, the adhesive composition for organic fiber cords according to the present disclosure is
the adhesive composition for organic fiber cords according to any one of [1] to [3], wherein the epoxy compound is selected from the group consisting of diethylene glycol diglycidyl ether, polyethylene diglycidyl ether, polypropylene glycol diglycidyl ether, neopentyl glycol diglycidyl ether, 1,6-hexanediol diglycidyl ether, glycerol polyglycidyl ether, trimethylolpropane polyglycidyl ether, polyglycerol polyglycidyl ether, pentaerythlythiol polyglycidyl ether, diglycerol polyglycidyl ether, and sorbitol polyglycidyl ether.

This adhesive composition for organic fiber cords has better adhesiveness.

Preferably, the adhesive composition for organic fiber cords according to the present disclosure is
the adhesive composition for organic fiber cords according to any one of [1] to [4], wherein the isocyanate compound is diphenylmethane diisocyanate or polyphenylene polymethylene polyisocyanate.

This adhesive composition for organic fiber cords has better adhesiveness.

Preferably, the adhesive composition for organic fiber cords according to the present disclosure is
the adhesive composition for organic fiber cords according to any one of [2] to [5], wherein the latex includes at least one selected from the group consisting of natural rubber (NR), polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp).

This adhesive composition for organic fiber cords provides a better bond between the adhesive layer by the adhesive composition for organic fiber cords and the adherend rubber. The latex has the advantage of being softer and more flexible, and allows deformation of the organic fiber cord without the adhesive layer breaking up.

Preferably, the adhesive composition for organic fiber cords according to the present disclosure is
the adhesive composition for organic fiber cords according to any one of [1] to [6], wherein the first bath treatment liquid contains the epoxy compound in a range of more than 5 mass% and 95 mass% or less and the isocyanate compound in a range of more than 5 mass% and 95 mass% or less in terms of solid content in dry matter of the first bath treatment liquid.

This adhesive composition for organic fiber cords has better adhesiveness.

Preferably, the adhesive composition for organic fiber cords according to the present disclosure is
the adhesive composition for organic fiber cords according to any one of [1] to [7], wherein a mass ratio of the polyphenol compound except resorcin to the aromatic ring-containing aldehyde compound in the second bath treatment liquid in terms of solid content in dry matter of the second bath treatment liquid is 0.1 or more and 3 or less.

This adhesive composition for organic fiber cords has better adhesiveness.

A method of producing an adhesive composition for organic fiber cords according to the present disclosure is
a method of producing the adhesive composition for organic fiber cords according to any one of [1] to [8], the method comprising: preparing the first bath treatment liquid by dissolving an epoxy compound and an isocyanate compound in a solvent; and preparing the second bath treatment liquid by adding an alkaline solution into a solution in which a polyphenol compound except resorcin is dissolved and thereafter adding an aromatic ring-containing aldehyde compound into the solution and causing dissolution and aging.

This method of producing an adhesive composition for organic fiber cords can produce the adhesive composition for organic fiber cords according to the present disclosure stably and efficiently by enhancing the solubility of the polyphenol compound (except resorcin) and the aromatic ring-containing aldehyde compound.

An organic fiber cord-rubber composite according to the present disclosure is
an organic fiber cord-rubber composite using an organic fiber cord treated with the adhesive composition for organic fiber cords according to any one of [1] to [8].

This organic fiber cord-rubber composite is produced using an environmentally friendly material and method, and is excellent in imparting performance such as strength and durability as a reinforcement member of a rubber article such as a tire.

A tire according to the present disclosure is
a tire using the organic fiber cord-rubber composite according to [10].

This tire is produced using an environmentally friendly material and method, and has excellent tire performance such as strength and durability.

### (Advantageous Effect)

It is thus possible to provide an adhesive composition for organic fiber cords that is environmentally friendly as a result of not containing resorcin and formalin and has good adhesiveness, a method of producing the adhesive composition for organic fiber cords, and a rubber reinforcement member (organic fiber cord-rubber composite) and a tire using the same.

### BRIEF DESCRIPTION OF THE DRAWINGS

In the accompanying drawings:

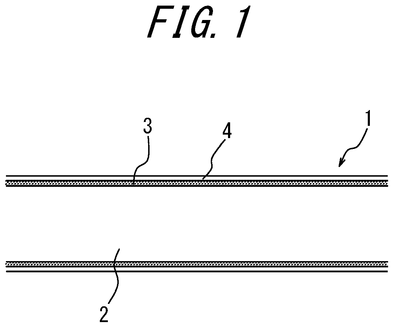

FIG. 1 is a schematic sectional view of an example of an organic fiber cord (adhesive-coated fiber) treated with an adhesive composition for organic fiber cords according to the present disclosure.

### DETAILED DESCRIPTION

One of the disclosed embodiments will be described in detail below. The following description is intended to be illustrative, and not restrictive.

### <Mass%>

Herein, "mass%" representing the content of each component in each of a first bath treatment liquid and a second bath treatment liquid is the ratio of the component in terms of solid content in dry matter of the bath treatment liquid.

### <Organic Fiber Cord>

An organic fiber cord of an adhesive composition for organic fiber cords according to the present disclosure is used to supplement the strength of a rubber article such as a tire. When using the organic fiber cord as a reinforcing material, first, organic fibers are twisted together into an organic fiber cord. The organic fiber cord is then adhered to a rubber for coating the organic fiber cord using the adhesive composition for organic fiber cords to thus form an organic fiber cord-rubber composite. This organic fiber cord-rubber composite is used as a reinforcement member of the rubber article such as a tire.

Examples of the material of the organic fiber cord include polyethylene terephthalate (PET) fibers, polyethylene naphthalate fibers, polyamide fibers such as nylon, polyketone fibers, aromatic polyamide fibers, polyparaphenylene benzobisoxazole fibers, rayon fibers, and lyocell fibers. The organic fiber cord may be used as an assembly of a plurality of single fibers. In this case, the average diameter of the single fibers needs to be 2 µm or more. Since the fibers forming the organic fiber cord are intended for use as, for example, a cord reinforcing material of a rubber article such as a tire, a belt, an air spring, or a rubber hose, the average diameter of the single fibers of filaments is preferably 2 µm or more, and more preferably 15 µm or more and 50 µm or less.

For example, in the case where the organic fiber cord is intended for use as a tire cord, the organic fibers forming the organic fiber cord are preferably a plurality of single fiber filaments twisted together.

### <First Bath Treatment Liquid and Second Bath Treatment Liquid>

The adhesive composition for organic fiber cords according to the present disclosure contains a first bath treatment liquid and a second bath treatment liquid.

The first bath treatment liquid is a treatment liquid that, in a process of adhering the organic fiber cord to an adherend rubber using the adhesive composition for organic fiber cords, is used to form an adhesive layer on the radial outer surface of the organic fiber cord before the treatment with the second bath treatment liquid.

The second bath treatment liquid is a treatment liquid that, in the process of adhering the organic fiber cord to the adherend rubber using the adhesive composition for organic fiber cords, is used to form another adhesive layer on the radial outer surface of the organic fiber cord on which the adhesive layer by the first bath treatment liquid has been formed after the treatment with the first bath treatment liquid.

In the process of adhering the organic fiber cord and the adherend rubber using the adhesive composition for organic fiber cords according to the present disclosure, the organic fiber cord may be optionally subjected to any treatment at any of the following timings: before the treatment with the first bath treatment liquid; after the treatment with the first bath treatment liquid and before the treatment with the second bath treatment liquid; and after the treatment with the second bath treatment liquid.

### <Composition of First Bath Treatment Liquid>

The first bath treatment liquid in the adhesive composition for organic fiber cords according to the present disclosure is a composition containing an epoxy compound and an isocyanate compound.

### <<Epoxy Compound>>

The epoxy compound is a compound having at least one epoxy group in one molecule. The epoxy compound functions as a crosslinking agent of the adhesive composition, and has excellent adhesiveness, heat resistance, durability, strength, flexibility, electric insulation, and the like.

The epoxy compound in the present disclosure is not limited, but is preferably a compound having two or more epoxy groups in one molecule and more preferably a compound having four or more epoxy groups in one molecule. As a result of the epoxy compound having two or more epoxy groups in one molecule, the compound functions effectively as a crosslinking agent by the epoxy groups. As a result of the epoxy compound having four or more epoxy groups in one molecule, crosslinking is denser and higher flexibility is imparted.

The epoxy compound in the present disclosure is not limited, but preferably has ten or less epoxy groups in one molecule. In this way, the crosslinking density is not excessively high, and toughness is imparted.

Specific examples of the epoxy compound include reaction products of polyhydric alcohols and epichlorohydrin, such as diethylene glycol diglycidyl ether, polyethylene diglycidyl ether, polypropylene glycol diglycidyl ether, neopentyl glycol diglycidyl ether, 1,6-hexanediol diglycidyl ether, glycerol polyglycidyl ether, trimethylolpropane polyglycidyl ether, polyglycerol polyglycidyl ether, pentaerythlythiol polyglycidyl ether, diglycerol polyglycidyl ether, and sorbitol polyglycidyl ether. The use of such compounds as the epoxy compound contributes to better adhesiveness of the adhesive composition for organic fiber cords.

The content of the epoxy compound is not limited, but is preferably more than 5 mass% and 95 mass% or less, more preferably 15 mass% or more and 85 mass% or less, and further preferably 15 mass% or more and 50 mass% or less in the first bath treatment liquid in terms of solid content in dry matter of the first bath treatment liquid. If the content of the epoxy compound is more than 5 mass%, more crosslinking by epoxy resin is formed in the adhesive layer by the adhesive composition for organic fiber cords, and high-temperature cohesive fracture resistance and adhesiveness are further improved and higher flexibility is imparted. If the content of the epoxy compound is 95 mass% or less, sufficient resin crosslinking is formed in the adhesive layer, and higher toughness is imparted.

### <<Isocyanate Compound>>

The isocyanate compound is a compound having at least one isocyanate group in one molecule as a polar functional group. The isocyanate compound has a function of facilitating adhesion to a resin material (for example, organic fiber material) which is the adherend of the adhesive composition. Herein, the term "isocyanate group" denotes a blocked isocyanate group or an isocyanate group, and includes not only an isocyanate group but also a blocked isocyanate group resulting from reaction with a blocking agent for isocyanate groups, an isocyanate group unreacted with a blocking agent for isocyanate groups, an isocyanate group resulting from dissociation of a blocking agent of a blocked isocyanate group, and the like.

The isocyanate compound preferably contains a molecular structure in which aromatics are bonded by an alkylene chain, and more preferably contains a molecular structure in which aromatics are methylene-bonded. Examples of the molecular structure in which aromatics are bonded by an alkylene chain include molecular structures in diphenylmethane diisocyanate, polyphenylene polymethylene polyisocyanate, and condensates of phenols and formaldehyde.

Examples of the isocyanate compound include a compound containing aromatic polyisocyanate and a thermally dissociative blocking agent, a water-dispersible compound containing a component obtained by blocking diphenylmethane diisocyanate or aromatic polyisocyanate by a thermally dissociative blocking agent, and an aqueous urethane compound.

A preferred example of the compound containing aromatic polyisocyanate and a thermally dissociative blocking agent is a blocked isocyanate compound containing diphenylmethane diisocyanate and a known isocyanate blocking agent. An example of the water-dispersible compound containing a component obtained by blocking diphenylmethane diisocyanate or aromatic polyisocyanate by a thermally dissociative blocking agent is a reaction product obtained by blocking diphenylmethane diisocyanate or polyphenylene polymethylene polyisocyanate by a known blocking agent for blocking isocyanate groups. Specifically, commercially available blocked polyisocyanate compounds such as ELASTRON BN69 and ELASTRON BN77 (produced by DKS Co. Ltd.) and MEIKANATE TP-10 (produced by Meisei Chemical Works, Ltd.) are available.

The aqueous urethane compound is obtained by reaction of an organic polyisocyanate compound (α) containing a molecular structure in which aromatics are bonded by an alkylene chain and preferably containing a molecular structure in which aromatics are methylene-bonded, a compound (β) containing a plurality of active hydrogen groups, and a thermally dissociative blocking agent (γ) for isocyanate groups. The aqueous urethane compound, with its flexible molecular structure, has not only a function as an adhesion improving agent but also a function of suppressing fluidization of the adhesive at high temperature as a flexible crosslinking agent.

Herein, the term "aqueous" denotes being water-soluble or water-dispersible. The term "water-soluble" denotes not only being completely water-soluble but also being partially water-soluble or not undergoing phase separation in a water solution of the adhesive composition according to the present disclosure.

As the aqueous urethane compound, for example, an aqueous urethane compound expressed by the following general formula (I) is preferable: 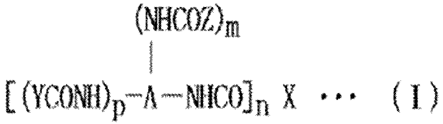 (where A is a residue resulting from elimination of an active hydrogen group of the organic polyisocyanate compound (α) containing a molecular structure in which aromatics are bonded by an alkylene chain, Y is a residue resulting from elimination of an active hydrogen group of the thermally dissociative blocking agent (γ) for isocyanate groups, Z is a residue resulting from elimination of an active hydrogen group of a compound (δ), X is a residue resulting from elimination of an active hydrogen group of the compound (β) having a plurality of active hydrogen groups, n is an integer of 2 or more and 4 or less, and p + m is an integer of 2 or more and 4 or less (m ≥ 0.25)).

Examples of the organic polyisocyanate compound (α) containing a molecular structure in which aromatics are bonded by an alkylene chain include methylene diphenyl polyisocyanate and polyphenylene polymethylene polyisocyanate.

The compound (β) having a plurality of active hydrogen groups is preferably a compound having two or more and four or less active hydrogen groups and having an average molecular weight of 5,000 or less. Examples of such compound (β) include (i) polyhydric alcohols having two or more and four or less hydroxyl groups, (ii) polyamines having two or more and four or less primary and/or secondary amino groups, (iii) aminoalcohols having two or more and four or less primary and/or secondary amino groups and hydroxyl groups, (iv) polyester polyols having two or more and four or less hydroxyl groups, (v) polybutadiene polyols having two or more and four or less hydroxyl groups and copolymers thereof with other vinyl monomers, (vi) polychloroprene polyols having two or more and four or less hydroxyl groups and copolymers thereof with other vinyl monomers, and (vii) polyether polyols having two or more and four or less hydroxyl groups and being C2 to C4 alkylene oxide polyaddition products of polyamines, polyhydric phenols, and aminoalcohols, C2 to C4 alkylene oxide polyaddition products of polyhydric alcohols of C3 or more, C2 to C4 alkylene oxide copolymers, or C3 to C4 alkylene oxide polymers.

The thermally dissociative blocking agent (γ) for isocyanate groups is a compound capable of liberating isocyanate groups by heat treatment, and may be, for example, a known isocyanate blocking agent.

The compound (δ) is a compound having at least one active hydrogen group and anionic and/or nonionic hydrophilic group. Examples of the compound having at least one active hydrogen group and anionic hydrophilic group include aminosulfonic acids such as taurine, N-methyltaurine, N-butyltaurine, and sulfanilic acid, and aminocarboxylic acids such as glycine and alanine. Examples of the compound having at least one active hydrogen group and nonionic hydrophilic group include compounds having a hydrophilic polyether chain.

The content of the isocyanate compound is not limited, but is preferably more than 5 mass% and 95 mass% or less, more preferably 15 mass% or more and 85 mass% or less, and further preferably 15 mass% or more and 70 mass% or less in the first bath treatment liquid in terms of solid content in dry matter of the first bath treatment liquid. If the content of the isocyanate compound is more than 5 mass%, the strength and chemical resistance of the adhesive layer by the adhesive composition for organic fiber cords are improved, and the adhesiveness to base material is improved. If the content of the isocyanate compound is 95 mass% or less, sufficient high-temperature cohesive fracture resistance of the adhesive layer is ensured, and sufficient high-temperature adhesiveness is ensured.

### <Composition of Second Bath Treatment Liquid>

The second bath treatment liquid in the adhesive composition for organic fiber cords according to the present disclosure is a composition containing a polyphenol compound (except resorcin) and an aromatic ring-containing aldehyde compound.

### <<Polyphenol Compound (except Resorcin)>>

The polyphenol compound (except resorcin) is a compound having two or more phenolic hydroxyl groups in one molecule other than resorcin. As a result of the polyphenol compound (except resorcin) containing phenolic hydroxyl groups, the polyphenol compound or a condensate of the polyphenol dissolves and is uniformly distributed in a moisture-containing adhesive composition liquid. Moreover, by not using resorcin, it is possible to form a relatively inexpensive resin that is environmentally friendly and has excellent mechanical strength, electric insulation, acid resistance, water resistance, heat resistance, etc.

The polyphenol compound (except resorcin) is preferably water-soluble.

If the polyphenol compound (except resorcin) is water-soluble, by dissolving the polyphenol compound (except resorcin) in an aqueous solvent, the second bath treatment liquid in the adhesive composition for organic fiber cords according to the present disclosure can be prepared by a simpler method at more reasonable costs with less environmental load.

Herein, the term "water-soluble" denotes not only being completely water-soluble but also being partially water-soluble or not undergoing phase separation in a water solution of the adhesive composition according to the present disclosure.

Non-limiting specific examples of the polyphenol compound (except resorcin) include phloroglucinol having the following chemical formula: 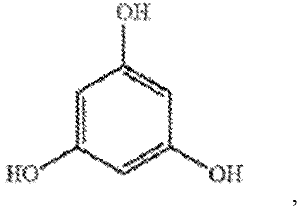 morin (2',4',3,5,7-pentahydroxyflavone) having the following chemical formula: 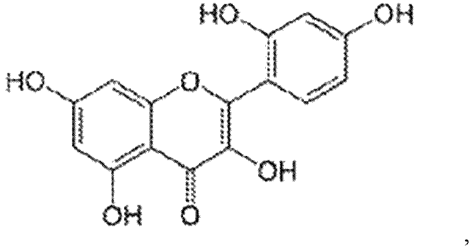 novolak-type resorcin-formaldehyde condensation type, derivatives of these compounds, and mixtures of these compounds.

The polyphenol compound (except resorcin) is preferably phloroglucinol.

These polyphenol compounds are more environmentally friendly than resorcin, and can serve as a material of the adhesive composition for organic fiber cords having good adhesiveness at reasonable costs.

The content of the polyphenol compound (except resorcin) is not limited, but is preferably 3.0 mass% or more and more preferably 3.5 mass% or more in the second bath treatment liquid in terms of solid content in dry matter of the second bath treatment liquid from the viewpoint of ensuring better adhesiveness. The content of the polyphenol compound (except resorcin) is not limited, but is preferably 13 mass% or less and more preferably 11 mass% or less in the second bath treatment liquid in terms of solid content in dry matter of the second bath treatment liquid from the viewpoint of reliably dissolving the polyphenol compound (except resorcin) and achieving better operability.

### <<Aromatic Ring-containing Aldehyde Compound>>

The aromatic ring-containing aldehyde compound is an aromatic aldehyde containing at least one aromatic ring and supporting at least one aldehyde functional group in one molecule. The aromatic ring-containing aldehyde compound is more environmentally friendly than formaldehyde, and enables formation of a relatively inexpensive resin that has excellent mechanical strength, electric insulation, acid resistance, water resistance, heat resistance, etc.

The aromatic ring-containing aldehyde compound in the present disclosure is preferably an aromatic polyaldehyde compound supporting two or more aldehyde functional groups in one molecule. If the two or more aldehyde groups are contained in one molecule of the aromatic polyaldehyde compound, the compound effectively functions as a crosslinking agent by the aldehyde groups. The aromatic ring is preferably an aromatic ring supporting an aldehyde functional group, and the aldehyde functional group may be present at the ortho, meta, or para position on the aromatic ring.

The aromatic ring of the aromatic ring-containing aldehyde compound is preferably a benzene ring or a furan ring. More preferably, the polyaldehyde is selected from the group consisting of 1,2-benzenedicarboxaldehyde, 1,3-benzenedicarboxaldehyde, 1,4-benzenedicarboxaldehyde, 2-hydroxybenzene-1,3,5-tricarbaldehyde, and mixtures of these compounds.

The aromatic ring-containing aldehyde compound is more preferably 1,4-benzenedicarboxaldehyde (also called terephthalaldehyde) having the following chemical formula:

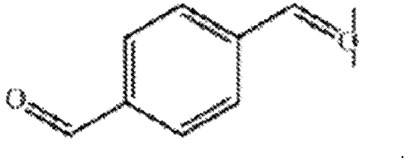

The furan ring-containing aldehyde compound is, for example, a compound having the following chemical formula: 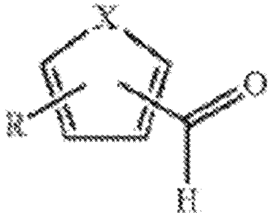 (where X is O, and R is -CHO or methylol).

These aromatic ring-containing aldehyde compounds are more environmentally friendly than formaldehyde, and can serve as a material of the adhesive composition for organic fiber cords having good adhesiveness at reasonable costs.

The content of the aromatic ring-containing aldehyde compound is not limited, but is preferably 1.0 mass% or more and more preferably 2.5 mass% or more in the second bath treatment liquid in terms of solid content in dry matter of the second bath treatment liquid from the viewpoint of ensuring better adhesiveness. The content of the aromatic ring-containing aldehyde compound is not limited, but is preferably 10 mass% or less and more preferably 9 mass% or less in the second bath treatment liquid in terms of solid content in dry matter of the second bath treatment liquid from the viewpoint of reliably dissolving the aromatic ring-containing aldehyde compound and achieving better operability.

In the adhesive composition for organic fiber cords according to the present disclosure, the mass ratio of the polyphenol compound (except resorcin) to the aromatic ring-containing aldehyde compound in the second bath treatment liquid (in terms of solid content in dry matter of the second bath treatment liquid) is preferably 0.1 or more and 3 or less and more preferably 0.25 or more and 2 or less.

Condensation reaction occurs between the polyphenol compound (except resorcin) and the aromatic ring-containing aldehyde compound, and the resin obtained as a result has more suitable hardness and adhesiveness.

### <<Latex>>

The second bath treatment liquid in the adhesive composition for organic fiber cords according to the present disclosure preferably further contains latex.

As a result of the second bath treatment liquid in the adhesive composition for organic fiber cords according to the present disclosure further containing latex, a good bond can be provided between the adhesive layer by the adhesive composition for organic fiber cords and the adherend rubber. The latex has the advantage of being relatively soft and flexible, and allows deformation of the organic fiber cord without the adhesive layer breaking up.

The second bath treatment liquid in the adhesive composition for organic fiber cords according to the present disclosure preferably further contains latex.

The latex is not limited. Examples of the latex that can be used include natural rubber (NR) and synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp). These rubber components may be used alone or in a blend of two or more.

The content of the latex is not limited, but is preferably 40 mass% or more and more preferably 70 mass% or more in the second bath treatment liquid in terms of solid content in dry matter of the second bath treatment liquid from the viewpoint of ensuring better adhesiveness. The content of the latex is not limited, but is preferably 99 mass% or less and more preferably 95 mass% or less in order to ensure at least a certain relative amount of components other than latex, such as a resin component, contained in the adhesive composition for organic fiber cords and thus ensure sufficient cohesive fracture resistance of the adhesive layer.

### <Method of Producing Adhesive Composition for Organic Fiber Cords>

The adhesive composition for organic fiber cords according to the present disclosure contains the first bath treatment liquid and the second bath treatment liquid.

### <<Preparation of First Bath Treatment Liquid>>

A method of producing the adhesive composition for organic fiber cords according to the present disclosure includes preparing the first bath treatment liquid by dissolving an epoxy compound and an isocyanate compound in a solvent.

The solvent is not limited, and examples of solvents that can be used include water and organic solvents such as various alcohols, toluene, xylene, n-hexane, cyclohexane, chloroform, and methyl ethyl ketone. These solvents may be used alone or in combination of two or more. The solvent is preferably water because of its environmental friendliness.

The structures, contents, etc. of the epoxy compound and the isocyanate compound are the same as those described in the foregoing sections <<Epoxy Compound>> and <<Isocyanate Compound>>.

### <<Preparation of Second Bath Treatment Liquid>>

The method of producing the adhesive composition for organic fiber cords according to the present disclosure includes preparing the second bath treatment liquid by adding an alkaline solution into a solution in which a polyphenol compound (except resorcin) is dissolved and thereafter adding an aromatic ring-containing aldehyde compound into the solution and causing dissolution and aging.

By enhancing the solubility of the polyphenol compound (except resorcin) and the aromatic ring-containing aldehyde compound in the preparation of the second bath treatment liquid, the adhesive composition for organic fiber cords according to the present disclosure can be stably and efficiently produced through uniform dispersion without gelation and the like.

Regarding the components of the second bath treatment liquid, in particular aromatic ring-containing aldehydes have a problem in that they are poorly soluble in water and, when simply blended, disperse in water and thus cannot be used as a component in an aqueous adhesive composition. In view of this, in the production method according to the present disclosure, the aromatic ring-containing aldehyde compound is added into and dissolved in the alkaline solution in which the polyphenol compound (except resorcin) is dissolved.

The mixing order is not limited as long as the order is as follows: (A) The polyphenol compound (except resorcin) is dissolved in the alkaline solvent; (B) Further, an alkaline solution is optionally added, and the aromatic ring-containing aldehyde compound is added; and (C) The polyphenol compound (except resorcin) and the aromatic ring-containing aldehyde compound as a solute are eventually dissolved. The preferable mixing order in the present disclosure is as follows: (A1) First, the polyphenol compound (except resorcin) is dissolved in water as a solvent; (A2) A necessary amount of base is added to form an alkaline solvent, and the polyphenol compound is phenolated to allow the solubility of the solute to be maintained; (B1) Next, an alkaline solvent is optionally added, and then the aromatic ring-containing aldehyde compound is added little by little; and (C1) The phenolate ions of the polyphenol compound (except resorcin) and the aromatic ring-containing aldehyde compound are dissolved while undergoing a chemical reaction change.

With this method of producing the adhesive composition for organic fiber cords according to the present disclosure, it is possible to sufficiently phenolate and dissolve the polyphenol compound (except resorcin) to be in a uniform state in the liquid of the adhesive composition for organic fiber cords, and also reliably dissolve the aromatic ring-containing aldehyde compound. The productivity of the adhesive composition for organic fiber cords according to the present disclosure having excellent adhesiveness can thus be improved.

The solution in which the polyphenol compound (except resorcin) is dissolved is a solution obtained by dissolving the polyphenol compound (except resorcin) in a predetermined solvent.

The structure and content of the polyphenol compound (except resorcin) added into the adhesive composition are the same as those described in the foregoing section <<Polyphenol Compound (except Resorcin)>>.

The solvent for dissolving the polyphenol compound (except resorcin) is not limited, and examples include water and alkaline solvents such as a sodium hydroxide solution. The solvent preferably contains both water and a sodium hydroxide solution, from the viewpoint of dissolving the polyphenol compound (except resorcin) more reliably.

The temperature of the water is preferably 40 °C or more and more preferably 60 °C or more, from the viewpoint of dissolving the polyphenol compound (except resorcin) more reliably.

The pH of the sodium hydroxide solution is preferably 9 or more and 13 or less and more preferably 10 or more and 12 or less, from the viewpoint of dissolving the polyphenol compound (except resorcin) more reliably and enhancing the productivity.

In the method of producing the adhesive composition for organic fiber cords according to the present disclosure, an alkaline solution is optionally added into the solution in which the polyphenol compound (except resorcin) is dissolved, before adding the aromatic ring-containing aldehyde compound. This alkaline solution can facilitate the dissolution of the aromatic ring-containing aldehyde compound and enable the production of the adhesive composition.

As the alkaline solution, ammonia water is preferable because it enhances the solubility of the subsequently added aromatic ring-containing aldehyde compound.

The pH of the ammonia water is preferably 9 or more and 13 or less and more preferably 10 or more and 12 or less, from the viewpoint of dissolving the aromatic ring-containing aldehyde compound more reliably and enhancing the productivity.

In the method of producing the adhesive composition for organic fiber cords according to the present disclosure, after adding the alkaline solution, the aromatic ring-containing aldehyde compound is added.

The structure and content of the aromatic ring-containing aldehyde compound added are the same as those described in the foregoing section <<Aromatic Ring-containing Aldehyde Compound>>.

It is preferable to gradually add the aromatic ring-containing aldehyde compound in the adhesive composition, from the viewpoint of suppressing a decrease in productivity while dissolving the aromatic ring-containing aldehyde compound more reliably.

In the method of producing the adhesive composition for organic fiber cords according to the present disclosure, after mixing the polyphenol compound (except resorcin) and the aromatic ring-containing aldehyde compound in the solvent, the solution is preferably stirred and aged at a given temperature for a given time. Such stirring and aging further enhance the adhesiveness of the adhesive composition for organic fiber cords.

The stirring and aging temperature (resin aging temperature) is not limited, but is preferably 20 °C or more and more preferably 40 °C or more. If the resin aging temperature is 20 °C or more, the adhesiveness of the adhesive composition for organic fiber cords can be further enhanced. The resin aging temperature is not limited, but is preferably 80 °C or less and more preferably 60 °C or less. If the resin aging temperature is 60 °C or less, an increase in viscosity associated with evaporation of the solution can be further suppressed.

The stirring and aging time (resin aging time) is not limited, but is preferably 30 min or more and more preferably 1 hr or more. If the resin aging time is 1 hr or more, the adhesiveness of the adhesive composition for organic fiber cords can be further enhanced. The resin aging time is not limited, but is preferably 6 hr or less and more preferably 4 hr or less. If the resin aging time is 6 hr or less, it is possible to estimate that the whole solute is dissolved and condensation progresses.

In the method of producing the adhesive composition for organic fiber cords according to the present disclosure, after adding the aromatic ring-containing aldehyde compound, latex may be further added to the second bath treatment liquid.

Adding latex containing a rubber component contributes to better adhesiveness between the resultant adhesive composition for organic fiber cords and the adherend rubber.

The structure, content, etc. of the latex are the same as those described in the foregoing section <<Latex>>.

In the method of producing the adhesive composition for organic fiber cords according to the present disclosure, in the case of adding the latex, it is more preferable to age the latex after the addition. In this way, the latex is coagulated more reliably, so that the handling easiness of the adhesive composition can be improved and the adhesiveness of the adhesive composition can be enhanced.

Herein, the aging of the latex denotes letting a certain time pass after adding and mixing the latex in order to improve the properties of the latex. The aging conditions are not limited. For example, it is preferable to age the latex at about 25 °C for 1 hour to several days to allow aging of the adhesive composition.

### <Organic Fiber Cord-Rubber Composite>

An organic fiber cord-rubber composite according to the present disclosure uses an organic fiber cord treated with the adhesive composition for organic fiber cords according to the present disclosure.

The organic fiber cord-rubber composite according to the present disclosure will be described in detail below, with reference to the drawing.

FIG. 1 is a schematic sectional view of an example of an organic fiber cord (adhesive-coated fiber) 1 treated with the adhesive composition for organic fiber cords according to the present disclosure. In the adhesive-coated fiber 1 illustrated in FIG. 1, the surface of an organic fiber cord 2 is coated with an adhesive layer 3 by the first bath treatment liquid. Its radial outside is further coated with an adhesive layer 4 by the second bath treatment liquid.

The organic fiber cord included in the organic fiber cord-rubber composite according to the present disclosure is as described in the foregoing section <Organic Fiber Cord>.

In the organic fiber cord-rubber composite according to the present disclosure, the mass of the adhesive composition for organic fiber cords with respect to the mass of the organic fiber cord as the adherend is preferably 0.2 mass% or more and 6.0 mass% or less in terms of solid content in dry matter of the respective materials.

The method of coating the surface of the organic fiber cord with the adhesive layer of the adhesive composition for organic fiber cords in the present disclosure is not limited. Examples include a method of immersing the organic fiber cord in the adhesive composition for organic fiber cords, a method of applying the adhesive composition for organic fiber cords to the surface of the organic fiber cord, and a method of blowing the adhesive composition for organic fiber cords on the organic fiber cord. The adhesive composition for organic fiber cords according to the present disclosure contains the first bath treatment liquid and the second bath treatment liquid. Hence, the radial outer surface of the organic fiber cord is first coated with the first bath treatment liquid by any of the foregoing coating methods, and then the radial outer surface of the organic fiber cord coated with the adhesive layer by the first bath treatment liquid is coated with the second bath treatment liquid by any of the foregoing coating methods.

The method of coating the radial outer surface of the organic fiber cord with the adhesive layer by the first bath treatment liquid and the method of coating the radial outer surface of the organic fiber cord coated with the adhesive layer by the first bath treatment liquid with the adhesive layer by the second bath treatment liquid may be the same or different.

In this coating treatment, in the case where the viscosity of the adhesive composition for organic fiber cords is high, an adhesive liquid containing the adhesive composition for organic fiber cords and a solvent may be used instead of using the adhesive composition for organic fiber cords alone. Examples of the adhesive liquid include a solution in which the components of the adhesive composition for organic fiber cords are completely or partially dissolved in the solvent, and a dispersion liquid in which the components of the adhesive composition for organic fiber cords are distributed in the solvent.

The solvent is not limited, and examples of solvents that can be used include water and organic solvents such as various alcohols, toluene, xylene, n-hexane, cyclohexane, chloroform, and methyl ethyl ketone. These solvents may be used alone or in combination of two or more. The solvent is preferably water because of its environmental friendliness.

The rubber included in the organic fiber cord-rubber composite according to the present disclosure is preferably obtained by blending a rubber component with compounding agents typically used in the rubber industry. The rubber component is not limited, and examples include natural rubber, conjugated diene-based synthetic rubbers such as polyisoprene rubber (IR), polybutadiene rubber (BR), styrene-butadiene copolymer rubber (SBR), acrylonitrile-butadiene rubber (NBR), chloroprene rubber (CR), and butyl rubber (IIR), ethylene-propylene copolymer rubber (EPM), ethylene-propylene-diene copolymer rubber (EPDM), and polysiloxane rubber. Of these, natural rubber and conjugated diene-based synthetic rubbers are preferable. These rubber components may be used alone or in combination of two or more.

The rubber component can be vulcanized using, for example, sulfur, a thiuram polysulfide compound such as tetramethylthiuram disulfide or dipentamethylenethiuram tetrasulfide, 4,4-dithiomorpholine, p-quinonedioxime, p,p'-dibenzoquinonedioxime, cyclic sulfurimide, or peroxide as a vulcanizing agent. Sulfur is preferable as a vulcanizing agent.

The rubber component may be appropriately blended with any of various compounding agents including a filler, a vulcanization accelerator, an age resistor, and a softener, such as carbon black, silica, or aluminum hydroxide, typically used in the rubber industry. A composite of the rubber component with particles, fibers, cloth, or the like of any of various materials may be used.

### <Tire>

A tire according to the present disclosure uses the organic fiber cord-rubber composite according to the present disclosure.

The tire according to the present disclosure includes, for example, members such as a carcass ply, a belt layer, a belt reinforcement layer, and a belt periphery reinforcement layer such as a flipper, and the organic fiber cord-rubber composite according to the present disclosure may be used in any of these members.

### EXAMPLES

The presently disclosed techniques will be described in more detail below by way of examples, although the present disclosure is not limited to these examples.

Two-bath treatment liquid-type adhesive compositions for organic fiber cords not containing resorcin and formaldehyde to reduce the environmental load and containing a first bath treatment liquid (containing an epoxy compound) and a second bath treatment liquid (containing a polyphenol compound (except resorcin) and an aromatic ring-containing aldehyde compound) were prepared by changing whether the first bath treatment liquid did not contain an isocyanate compound (Comparative Examples) or contained an isocyanate compound (Examples), changing the content of the epoxy compound (1 mass% and 3 mass% in liquid of the first bath treatment liquid), and changing the resin aging temperature (25 °C and 50 °C) and the resin aging time (0 hr, 2 hr, and 4 hr) in the preparation of the second bath treatment liquid. The prepared adhesive compositions for organic fiber cords were each used to produce an organic fiber cord-rubber composite, and their adhesiveness were measured and compared.

### <Preparation of First Bath Treatment Liquid>

As the first bath treatment liquid not containing an isocyanate compound in each Comparative Example, a solution obtained by diluting, with water, DENACOL EX614B (Nagase ChemteX Corporation) as an epoxy compound so as to be 1 mass% (Comparative Examples 1 to 4) or 3 mass% (Comparative Examples 5 to 8) was prepared. As the first bath treatment liquid containing an isocyanate compound in each Example, a solution (Examples 1 to 4) obtained by diluting, with water, DENACOL EX614B so as to be 1 mass%, ELASTRON BN77 (DKS Co. Ltd.) as the isocyanate compound so as to be 3 mass%, and ISOBAM (Kuraray Co., Ltd.) so as to be 6 mass% was prepared. Each value in mass% is the mass ratio of the component contained as liquid or solid in liquid of the first bath treatment liquid. The formulation of the first bath treatment liquid in each of Comparative Examples and Examples is shown in Table 1.

**[Table 1] Formulation of first bath treatment liquid**

| Ingredient of first bath treatment liquid | Comparative Examples 1 to 4 | | Comparative Examples 5 to 8 | | Examples 1 to 4 | |
|---|---|---|---|---|---|---|
| | Compounding ratio ^{+a} in liquid | Solid content ratio +b of dry matter | Compounding ratio in liquid ^{+a} | Solid content ratio ^{+b} of dry matter | Compounding ratio in liquid ^{+a} | Solid content ratio +b of dry matter |
| ^{∗}1 Epoxy compound | 1 | 100 | 3 | 100 | 1 | 38 |
| ^{∗}2 Isocyanate compound | 0 | 0 | 0 | 0 | 3 | 35 |
| ISOBAM | 0 | 0 | 0 | 0 | 6 | 27 |
| Water | 99 | - | 97 | - | 90 | - |
| Total mass% | 100 | 100 | 100 | 100 | 100 | 100 |

| | | | | | | |
|---|---|---|---|---|---|---|
| - Compounding ratio in liquid^{+a}: mass% as the ratio of the component contained as liquid or solid in liquid of the first bath treatment liquid. - Solid content ratio of dry matter^{+b}: in the case where "Compounding ratio in liquid" in the table is as defined above, mass% as the ratio of solid content in dry matter of the liquid. | | | | | | |

### <Preparation of Second Bath Treatment Liquid>

The formulation of the second bath treatment liquid in each of Comparative Examples and Examples with the total mass being 100 is as follows (each value in mass% is the mass ratio of the component contained as liquid or solid in liquid of the second bath treatment liquid).

**[Table 2] Formulation of second bath treatment liquid**

| Ingredient of second bath treatment liquid | | Compounding ratio in second bath treatment liquid (mass%) |
|---|---|---|
| ^{∗}3 Polyphenol compound (except resorcin) | | 9.0 |
| ^{∗}4 Aromatic ring-containing aldehyde compound | | 1.7 |
| ^{∗}5 Sodium hydroxide | | 4.9 |
| ^{∗}6 Ammonia | | 2.0 |
| Latex | ^{∗}7 Natural rubber | 10.7 |
| | ^{∗}8 Styrene-butadiene copolymer rubber | 8.0 |
| | ^{∗}9 Vinylpyridine-styrene-butadiene copolymer rubber | 15.6 |
| Water | | 48.1 |
| Total mass% | | 100.0 |

The details of each ingredient marked with ^{∗} in Tables 1 and 2 are shown in Table 3.

**[Table 3] Details of each ingredient in compositions of first bath treatment liquid and second bath treatment liquid**

| Ingredient | | Company/Trade name | Use form |
|---|---|---|---|
| ^{∗}1 Epoxy compound | | Nagase ChemteX Corporation/ DENACOL EX614B | Use in undiluted form |
| ^{∗}2 Isocyanate compound | | DKS Co. Ltd./ ELASTRON BN77 | Use in undiluted form |
| ^{∗}3 Polyphenol compound (except resorcin) | | FUJIFILM Wako Pure Chemical Corporation/ Phloroglucinol | Use as 10mass% water solution |
| ^{∗}4 Aromatic ring-containing aldehyde compound | | Tokyo Chemical Industry Co., Ltd./ 1,4-benzenedicarboxaldehyde | 98mass% purity |
| ^{∗}5 Sodium hydroxide | | Kanto Chemical Co., Inc./ IN NaOH water solution | Use in undiluted form |
| ^{∗}6 Ammonia | | Kanto Chemical Co., Inc./ 25mass% water solution | Use in undiluted form |
| Latex | ^{∗}7 Natural rubber | Sime Darby/ HYTEX HA | Use in undiluted form |
| | ^{∗}8 Styrene-butadiene copolymer rubber | JSR/ SBR Latex 2108 | Use in undiluted form |
| | ^{∗}9 Vinylpyridine-styrene-butadiene copolymer rubber | Nippon A&L Inc./ PYRATEX | Use in undiluted form |

In the case of blending each ingredient in the second bath treatment liquid as shown in Table 2, mass% as the ratio of solid content in dry matter of the second bath treatment liquid is as shown in Table 4.

**[Table 4] Mass% as ratio of solid content in dry matter of second bath treatment liquid in the case of blending each ingredient in second bath treatment liquid as shown in Table 2**

| Ingredient of second bath treatment liquid | | Solid content ratio of dry matter of second bath treatment liquid (mass%) |
|---|---|---|
| ^{∗}3 Polyphenol compound (except resorcin) | | 4.7 |
| ^{∗}4 Aromatic ring-containing aldehyde compound | | 8.8 |
| ^{∗}5 Sodium hydroxide | | 1.0 |
| ^{∗}6 Ammonia | | 2.6 |
| Latex | ^{∗}7 Natural rubber | 33.2 |
| | ^{∗}8 Styrene-butadiene copolymer rubber | 16.6 |
| | ^{∗}9 Vinylpyridine-styrene-butadiene copolymer rubber | 33.2 |
| Total mass% | | 100.0 |

| | | |
|---|---|---|
| - ⁺⁺: In Table 4, ammonia fixed in dry matter is taken to be solid content. | | |

Phloroglucinol (PG) was dissolved in water of 40 °C or more so as to be 10 mass%. To the resultant solution, 4 mass% NaOH, water, and 25 mass% ammonia water were added in this order, and then 1,4-benzenedicarboxaldehyde (TA) was gradually added little by little. The addition was performed with constant stirring at 40 °C or more and 60 °C or less.

After stirring the solution until PG and TA dissolved, resin aging was performed and a PG/TA resin was formed. To study an adhesive composition for organic fiber cords having optimal adhesiveness, in the resin aging in the production process of the adhesive composition for organic fiber cords, the resin aging temperature was set to room temperature (ambient temperature) of 25 ± 1 °C (Comparative Examples 1, 2, 5, and 6, Examples 1 and 2) or to 50 °C (Comparative Examples 3, 4, 7, and 8, Examples 3 and 4) and the resin aging time was set to 0 hr (Comparative Examples 1 and 5, Example 1), 2 hr (Comparative Examples 2, 3, 6, and 7, Examples 2 and 3), or 4 hr (Comparative Examples 4 and 8, Example 4).

Latex (natural rubber (NR), styrene-butadiene copolymer rubber (SBR), or vinylpyridine-styrene-butadiene copolymer rubber (Vp) in the composition in Table 2) was added to the PG/TA resin after the predetermined resin aging while stirring at room temperature (ambient temperature) of 27 ± 1 °C, and then the adhesive composition was aged at 27 ± 1 °C for 24 hr to obtain the second bath treatment liquid.

### <Adhesion Treatment of Organic Fiber Cord (PET Cord for Tires) by First Bath Treatment Liquid>

After performing stirring to uniformly disperse the components in the first bath treatment liquid, an organic fiber cord (PET cord for tires) with a cord fineness of 1670 dtex/2, a number of first twists of 39/10 cm, and a number of second twists of 39/10 cm was immersed in the first bath treatment liquid. Following this, the solvent in the first bath treatment liquid attached to the PET cord for tires was dried, and the PET cord for tires was subjected to adhesion treatment by heating to obtain a PET cord for tires adhesion-treated by the first bath treatment liquid. As the conditions of the drying treatment, the dry temperature was 160 °C and the dry time was 80 sec. As the conditions of the adhesion treatment by heating, the heating temperature was 205 °C and the heating time was 60 sec.

### <Adhesion Treatment of Organic Fiber Cord (PET Cord for Tires) by Second Bath Treatment Liquid>

The PET cord for tires adhesion-treated by the first bath treatment liquid was immersed in the second bath treatment liquid. Following this, the solvent in the second bath treatment liquid attached to the PET cord for tires was dried, and the PET cord for tires was subjected to adhesion treatment by heating to obtain a PET cord for tires having the structure illustrated in FIG. 1. As the conditions of the drying treatment, the dry temperature was 160 °C and the dry time was 80 sec. As the conditions of the adhesion treatment by heating, the heating temperature was 245 °C and the heating time was 60 sec.

### <Production of Organic Fiber Cord-Rubber Composite and Evaluation of Adhesiveness>

The PET cord for tires adhesion-treated by the first bath treatment liquid and then adhesion-treated by the second bath treatment liquid was buried in a rubber composition in an unvulcanized state containing natural rubber, a rubber component composed of a styrene-butadiene copolymer, carbon black, and a crosslinking agent. The resultant test piece was vulcanized at 160 °C for 20 min under pressure of 20 kgf/cm². The obtained vulcanizate was cooled to 23 °C, and the cord was dug up from the vulcanizate. The resistance when separating the cord from the vulcanizate at a speed of 30 cm/min was measured at room temperature (ambient temperature) of 23 ± 1 °C.

### <Adhesiveness Evaluation Results>

The results of evaluating the adhesiveness in each of Comparative Examples 1 to 8 and Examples 1 to 4 are shown in Table 5.

**[Table 5] Adhesiveness evaluation results**

| | First bath treatment liquid | | Resin aging temperature | Resin aging time | Adhesiveness N(newton)/cord | Average adhesiveness ^{∗3} N(newton)/cord | Index^{∗4} |
|---|---|---|---|---|---|---|---|
| | Isocyanate compound containment^{∗1} | Epoxy compound content^{∗2} | | | | | |
| Comparative Example 1 | - | 1mass% | 25°C | 0 hr | 19.2 | 19.3 | 100 |
| Comparative Example 2 | - | 1mass% | 25°C | 2 hr | 19.3 | | |
| Comparative Example 3 | - | 1mass% | 50°C | 2 hr | 19.3 | | |
| Comparative Example 4 | - | 1mass% | 50°C | 4 hr | 19.4 | | |
| Comparative Example 5 | - | 3mass% | 25°C | 0 hr | 19.9 | 19.8 | 102 |
| Comparative Example 6 | - | 3mass% | 25°C | 2 hr | 20.0 | | |
| Comparative Example 7 | - | 3mass% | 50°C | 2 hr | 19.6 | | |
| Comparative Example 8 | - | 3mass% | 50°C | 4 hr | 19.5 | | |
| Example 1 | + | 1mass% | 25°C | 0 hr | 21.4 | 21.4 | 111 |
| Example 2 | + | 1mass% | 25°C | 2 hr | 21.4 | | |
| Example 3 | + | 1mass% | 50° C | 2 hr | 21.5 | | |
| Example 4 | + | 1mass% | 50° C | 4 hr | 21.2 | | |

| | | | | | | | |
|---|---|---|---|---|---|---|---|
| - Isocyanate compound containment^{∗1}: "-" indicates not containing the isocyanate compound in the first bath treatment liquid, and "+" indicates containing the isocyanate compound in the first bath treatment liquid. - Epoxy compound content^{∗2}: mass% as the content of the epoxy compound contained as liquid or solid in liquid of the first bath treatment liquid. - Average adhesiveness^{∗3}: an average of measured values of adhesiveness in each of: Comparative Examples 1 to 4 equal in epoxy compound content; Comparative Examples 5 to 8 equal in epoxy compound content; and Examples 1 to 4 equal in epoxy compound content. Index^{∗4}: a relative value of average adhesiveness in each of: Comparative Examples 5 to 8; and Examples 1 to 4, where the average adhesiveness in Comparative Examples 1 to 4 is 100. | | | | | | | |

Thus, two-bath treatment liquid-type adhesive compositions for organic fiber cords not containing resorcin and formaldehyde to reduce the environmental load and containing a first bath treatment liquid (containing an epoxy compound) and a second bath treatment liquid (containing a polyphenol compound (except resorcin) and an aromatic ring-containing aldehyde compound) were prepared with the first bath treatment liquid not containing an isocyanate compound (Comparative Examples), where the content of the epoxy compound in the first bath treatment liquid was 1 mass% or 3 mass% and the resin aging temperature was 25 °C or 50 °C and the resin aging time was 0 hr, 2 hr, or 4 hr in the preparation of the second bath treatment liquid. The prepared adhesive compositions for organic fiber cords were each used to produce an organic fiber cord-rubber composite, and their adhesiveness were measured.

The adhesiveness of the organic fiber cord-rubber composite produced using the adhesive composition for organic fiber cords in each of Comparative Examples 1 to 8 was in a range of 19.2 N/cord to 20.0 N/cord. The average adhesiveness of the organic fiber cord-rubber composites produced using the adhesive compositions for organic fiber cords in Comparative Examples 1 to 4 was 19.3 N/cord (index: 100), and the average adhesiveness of the organic fiber cord-rubber composites produced using the adhesive compositions for organic fiber cords in Comparative Examples 5 to 8 was 19.8 N/cord (index: 102).

On the other hand, the adhesiveness of the organic fiber cord-rubber composite produced using each adhesive composition for organic fiber cords prepared with the first bath treatment liquid containing an isocyanate compound (Examples) where the content of the epoxy compound was 1 mass% and the resin aging temperature was 25 °C or 50 °C and the resin aging time was 0 hr, 2 hr, or 4 hr in the preparation of the second bath treatment liquid was in a range of 21.2 N/cord to 21.5 N/cord. The average adhesiveness of the organic fiber cord-rubber composites produced using the adhesive compositions for organic fiber cords in Examples 1 to 4 was 21.4 N/cord (index: 111), indicating an improvement over the average adhesiveness in Comparative Examples 1 to 4 (19.3 N/cord (index: 100)) and the average adhesiveness in Comparative Examples 5 to 8 (19.8 N/cord (index: 102)).

This demonstrates that "an adhesive composition for organic fiber cords comprising: a first bath treatment liquid; and a second bath treatment liquid, wherein the first bath treatment liquid is a composition containing an epoxy compound and an isocyanate compound, and the second bath treatment liquid is a composition containing a polyphenol compound except resorcin and an aromatic ring-containing aldehyde compound" according to the present disclosure is an adhesive composition for organic fiber cords that is environmentally friendly as a result of not containing resorcin and formalin and has good adhesiveness.

### INDUSTRIAL APPLICABILITY

It is thus possible to provide an adhesive composition for organic fiber cords that is environmentally friendly as a result of not containing resorcin and formalin and has good adhesiveness, a method of producing the adhesive composition for organic fiber cords, and a rubber reinforcement member (organic fiber cord-rubber composite) and a tire using the same. The organic fiber cord-rubber composite is usable as a reinforcement member of a rubber article such as a tire, and thus the presently disclosed techniques can be used, for example, in the industry of producing rubber articles such as tires.

### REFERENCE SIGNS LIST

- 1: organic fiber cord treated with adhesive composition for organic fiber cords (adhesive-coated fiber)
- 2: organic fiber cord
- 3: adhesive layer by first bath treatment liquid
- 4: adhesive layer by second bath treatment liquid

## Claims

1. An adhesive composition for organic fiber cords comprising:
a first bath treatment liquid; and
a second bath treatment liquid,
wherein the first bath treatment liquid is a composition containing an epoxy compound and an isocyanate compound, and
the second bath treatment liquid is a composition containing a polyphenol compound except resorcin and an aromatic ring-containing aldehyde compound.

2. The adhesive composition for organic fiber cords according to claim 1, wherein the second bath treatment liquid further contains latex.

3. The adhesive composition for organic fiber cords according to claim 1 or 2, wherein the aromatic ring-containing aldehyde compound has two or more aldehyde groups in one molecule.

4. The adhesive composition for organic fiber cords according to any one of claims 1 to 3, wherein the epoxy compound is selected from the group consisting of diethylene glycol diglycidyl ether, polyethylene diglycidyl ether, polypropylene glycol diglycidyl ether, neopentyl glycol diglycidyl ether, 1,6-hexanediol diglycidyl ether, glycerol polyglycidyl ether, trimethylolpropane polyglycidyl ether, polyglycerol polyglycidyl ether, pentaerythlythiol polyglycidyl ether, diglycerol polyglycidyl ether, and sorbitol polyglycidyl ether.

5. The adhesive composition for organic fiber cords according to any one of claims 1 to 4, wherein the isocyanate compound is diphenylmethane diisocyanate or polyphenylene polymethylene polyisocyanate.

6. The adhesive composition for organic fiber cords according to any one of claims 2 to 5, wherein the latex includes at least one selected from the group consisting of natural rubber (NR), polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp).

7. The adhesive composition for organic fiber cords according to any one of claims 1 to 6, wherein the first bath treatment liquid contains the epoxy compound in a range of more than 5 mass% and 95 mass% or less and the isocyanate compound in a range of more than 5 mass% and 95 mass% or less in terms of solid content in dry matter of the first bath treatment liquid.

8. The adhesive composition for organic fiber cords according to any one of claims 1 to 7, wherein a mass ratio of the polyphenol compound except resorcin to the aromatic ring-containing aldehyde compound in the second bath treatment liquid in terms of solid content in dry matter of the second bath treatment liquid is 0.1 or more and 3 or less.

9. A method of producing the adhesive composition for organic fiber cords according to any one of claims 1 to 8, the method comprising:
preparing the first bath treatment liquid by dissolving an epoxy compound and an isocyanate compound in a solvent; and
preparing the second bath treatment liquid by adding an alkaline solution into a solution in which a polyphenol compound except resorcin is dissolved and thereafter adding an aromatic ring-containing aldehyde compound into the solution and causing dissolution and aging.

10. An organic fiber cord-rubber composite using an organic fiber cord treated with the adhesive composition for organic fiber cords according to any one of claims 1 to 8.

11. A tire using the organic fiber cord-rubber composite according to claim 10.
